# FASCICULE DE BREVET EUROPEEN

(11) **EP 1 271 031 B1**
(45) Date de publication et mention de la délivrance du brevet: **12.01.2005**
(21) Numéro de dépôt: 02370016.4
(22) Date de dépôt: 29.04.2002
(51) Int. Cl.: F16L 11/08, D04B 9/44, D04B 25/02

(54) **Tuyau souple renforcé par un tricot**
Schlauch verstärkt durch ein gestricktes Gewebe
Hose reinforced by a knitted fabric

(30) Priorité: 19.06.2001 FR 0108057
(43) Date de publication de la demande: 02.01.2003
(73) Titulaire: SOTEP - Société Technique Extrusion Plastique, S.A., 60310 Roye sur Matz (FR)
(72) Inventeur: Begassat, Michel, 60510 Therdonne (FR); Dos Santos Ferreira, Christine, 60510 Laversines (FR)
(74) Mandataire: Hennion, Jean-Claude

(56) Documents cités:
- EP-A- 0 338 805
- EP-A- 0 726 416
- GB-A- 422 749
- US-A- 2 141 042
- US-A- 3 511 062

## Description

L'invention se rapporte à un tuyau souple renforcé par un tricot.

Les tuyaux d'arrosage sont réalisés en matériau synthétique souple et sont généralement armés pour résister à la pression de l'eau qui s'exerce à l'intérieure de la conduite.

Cela est d'autant plus nécessaire lorsque l'on diminue l'épaisseur du tuyau pour que celui ci soit plus souple.

Il existe deux procédés pour réaliser cette armure.

Le premier procédé est le guipage et consiste à enrouler hélicoïdalement un fil autour d'un tube pour ensuite le recouvrir d'une couche de protection.

Le second procédé auquel se rapporte directement l'invention est la mise en place d'un tricot toujours autour d'un tuyau interne lequel est ensuite recouvert par une couche de protection.

L'utilisation d'un tricot permet d'obtenir un tuyau plus souple que ceux dit guipés.

La souplesse d'un tuyau est un élément technique souvent pris en compte pour l'achat.

Pour ce faire, on utilise un métier à tricoter circulaire pour former un tricot dit à mailles cueillies.

Du fait de l'avance, les rangées de mailles ne sont pas perpendiculaires à l'axe longitudinal des fils de chaînes qui sont parallèles à l'axe longitudinal du tuyau et, de ce fait, la présence de cette inclinaison des rangées de mailles, ce tricot engendre un phénomène de torsion lors de la mise sous pression.

Lorsque le tuyau est soumis à une pression interne, les fils de renfort se tendent. Ce phénomène a pour effet de créer des forces qui, si elles ne sont pas équilibrées comme dans les renforts tricotés à mailles cueillies ou jersey, de provoquer une torsion ou un vrillage du tuyau sur lui-même.

Pour combattre ce phénomène deux solutions existent.

La première solution EP-0.623.776 consiste à incliner l'axe du tricot de sorte que l'angle formé entre l'axe longitudinal du tuyau et l'axe des fils de trame soit en valeur absolue, identique à l'angle formé entre cet axe longitudinal et l'axe des fils de chaînes mais de sens opposé.

On obtient ainsi en principe un équilibrage.

Pour réaliser ce tricot, on utilise une tête tournante portant les bobines de fil à tricoter.

La deuxième solution FR-A-2.793.866 consiste à déposer deux tricots mais de manière inversée, de sorte que la rotation induite par un tricot contrarie la rotation induite par l'autre tricot.

On utilise alors une machine à deux plateaux tournants.

Ces méthodes ont pour inconvénient de compliquer les machines et des obligations techniques liées notamment au poids des bobines limitent la vitesse de production.

En effet, en raison de la force centrifuge, il est nécessaire de limiter la taille des bobines et la vitesse de rotation.

L'invention a pour objectif d'apporter une solution aux problèmes évoqués plus haut.

L'invention a pour objet un tuyau souple renforcé par un tricot, ce tuyau étant caractérisé en ce que le tricot est un tricot à mailles jetées comprenant des mailles inclinées dans des sens opposés.

L'invention sera bien comprise à l'aide de la description ci-après faite à titre d'exemple non limitatif en regard du dessin qui représente schématiquement :
- figure 1 : vue de dessus d'un tuyau armé avec localement la partie externe arrachée,
- figure 2 : vue d'un tricot utilisé dans l'invention,
- figure 3 : vue d'un tricot selon la figure 2 avec déformation radiale.

En se reportant au dessin, on voit un tuyau 1 souple armé d'un tricot 2. Ce tricot est emprisonné entre deux couches 1A, 1B, de matière synthétique.

Pour la mise en place de ce tricot, on fait appel à un métier à tricoter placé en sortie d'une extrudeuse.

Le tuyau revêtu de son tricot est ensuite passé dans un bain ou recouvert par extrusion pour constituer autour du tricot une protection et un moyen de fixation du tricot sur le tube interne.

Ce tricot est destiné principalement à limiter la déformation radiale du tuyau sous l'effet de la pression.

Outre cette fonctionnalité, il présente des capacités anti-torsion.

Selon l'invention, le tricot 2 est un tricot à mailles jetées comprenant des mailles 2A, 2B, inclinées dans des sens opposés.

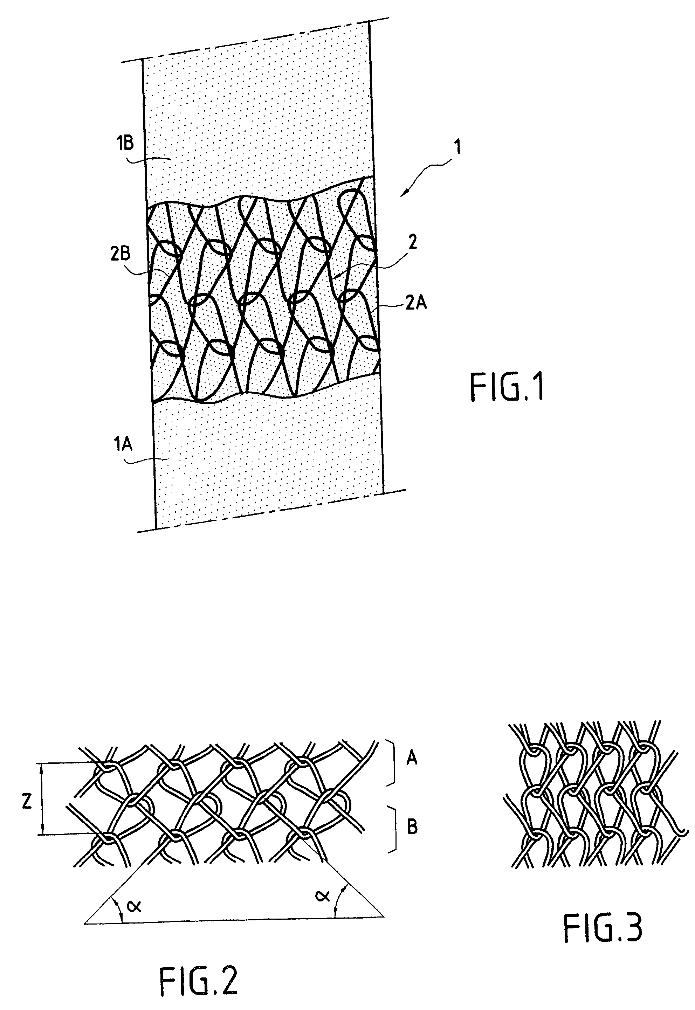

On a représenté en figure 2, un tricot à mailles jetées sans déformation et en figure 3, le même tricot ayant subi une déformation radiale.

On voit que l'une A des rangées de mailles est inclinée dans un sens et l'autre B dans l'autre sens et ainsi de suite.

Lorsque la déformation radiale augmente, on constate que l'inclinaison de ces mailles par rapport à un axe longitudinal augmente ce qui contribue alors à augmenter l'effet anti-torsion.

Pour des mailles dites standard, la déformation radiale d'un tuyau revêtu de mailles jetées est plus faible que pour les tuyaux comportant des tricots à mailles cueillies.

On obtient donc un tuyau plus résistant mais sans torsion.

Un autre avantage de l'utilisation de ce tricot à mailles jetées consiste dans le fait que le tuyau est équilibré anti-torsion sans avoir à recourir à des artifices ; inclinaison ou double tricot.

On peut ainsi utiliser des machines plus simples, moins dangereuses car elles ne comportent pas de poids important en rotation.

Les bobines qui alimentent ces machines peuvent être plus importantes d'où un changement moins fréquent de bobines.

Grâce au renfort tricoté à mailles jetées décrit dans ce brevet, celui-ci étant par construction directement équilibré avec une résultante des forces égale à zéro lorsque les mailles forment un angle α voisin de quarante cinq degrés, ou une résultante suivant l'axe du tuyau lorsque l'angle s'éloigne dans un sens ou dans l'autre des quarante cinq degrés, il n'y a absolument aucune torsion.

Ce phénomène de résultante nulle est spécifique dans la facilité d'obtention pour ce type de tricot par rapport à un tricot à mailles cueillies.

Dans tous les réglages ce type de tricot est anti-torsion. De bons résultats ont été obtenus avec un angle alpha de quarante cinq degrés et une côte Z entre maille voisine de quatre millimètres.

Ces dimensions peuvent varier en fonction de l'épaisseur du fil, de sa résistance, de sa souplesse, du fait d'un tricot croisé sur deux, trois ou quatre aiguilles, du fait d'un tricot double ou triple.

D'autre part, ce type de renfort permet des rayons de courbures beaucoup plus faibles que les autres renforts.

Grâce au tricot chaîne, par le fait que les fils ne font pas le tour de la circonférence, les degrés de liberté seront plus importants et faciliteront l'aptitude à la compression de la fibre du bas.

Ceci implique que même dans les conditions les plus sévères d'utilisation, avec des boucles sur le tuyau, notre renfort permettra un meilleur passage de l'eau.

Un avantage de ce type de tricot simple et donc faisant appel à un plus grand nombre d'aiguilles fait qu'il y a moins de serrage de la conduite interne car la distance du fil parcouru sur la fraction de circonférence est plus faible et donc les effets de torsion sont plus faibles.

On facilite le passage du fluide lorsque le tuyau est plié car, plié, le tricot a tendance à se désolidariser de la gaine intérieure.

## Revendications

1. Tuyau souple renforcé d'un tricot **caractérisé en ce que** le tricot (2) est un tricot à mailles jetées comprenant des mailles (2A, 2B) inclinées dans des sens opposés.

2. Tuyau souple renforcé selon la revendication 1 **caractérisé en ce que** l'une (A) des rangées de mailles est inclinée dans un sens et l'autre (B) dans l'autre sens et ainsi de suite.

3. Tuyau souple renforcé selon la revendication 1 **caractérisé en ce que** les mailles forment un angle α voisin de quarante cinq degrés.

4. Tuyau souple renforcé selon la revendication 3 **caractérisé en ce que** la cote (Z) entre maille est de quatre millimètres.

## Patentansprüche

1. Schlauch, der durch ein Trikot- bzw. Strickgewebe verstärkt ist, **dadurch gekennzeichnet, dass** das Trikot-Gewebe (2) ein Trikot-Gewebe mit Wurf-Maschen ist, das Maschen (2A, 2B) aufweist, die in entgegengesetzter Richtung schräg zueinander angeordnet sind.

2. Verstärkter Schlauch nach Anspruch 1, **dadurch gekennzeichnet, dass** eine Reihe (A) der Maschenreihen in einer Richtung schräg angeordnet ist, und die andere Reihe (B) in der anderen Richtung angeordnet ist, und sofort.

3. Verstärkter Schlauch nach Anspruch 1, **dadurch gekennzeichnet, dass** die Maschen miteinander einen Winkel α von etwa 45 ° bilden.

4. Verstärkter Schlauch nach Anspruch 3, **dadurch gekennzeichnet, dass** die Kote (die Höhe) (Z) zwischen den Maschen 4 mm beträgt.

## Claims

1. Flexible hose reinforced by a knitted fabric, **characterised by** the fact that the knitted fabric (2) is a warp stitch knitted fabric made up of stitches (2A, 2B) inclined in opposite directions.

2. Flexible hose reinforced as described in Claim 1 and **characterised by** the fact that one (A) of the rows of stitches is inclined in one direction and the other (B) in the other direction and so on.

3. Flexible hose reinforced as described in Claim 1 and **characterised by** the fact that the stitches form an angle α of around forty five degrees.

4. Flexible hose reinforced as described in Claim 3 and **characterised by** the fact that the distance (Z) between stitches is four millimetres
